Europäisches Patentamt

European Patent Office

Office européen des brevets

(11) Veröffentlichungsnummer: **0 317 701 B1**

(12) **EUROPÄISCHE PATENTSCHRIFT**

(45) Veröffentlichungstag der Patentschrift: **08.07.92**

(21) Anmeldenummer: **88107547.7**

(22) Anmeldetag: **11.05.88**

(51) Int. Cl.⁵: **C04B 35/56**, C04B 35/65

(54) Feuerfestmaterial und Verfahren zur Herstellung desselben.

(30) Priorität: **17.12.87 DE 3742862**
    **23.11.87 DE 3739571**

(43) Veröffentlichungstag der Anmeldung:
    **31.05.89 Patentblatt 89/22**

(45) Bekanntmachung des Hinweises auf die
    Patenterteilung:
    **08.07.92 Patentblatt 92/28**

(84) Benannte Vertragsstaaten:
    **AT BE CH DE ES FR GB GR IT LI LU NL SE**

(56) Entgegenhaltungen:
    **DE-A- 3 343 577**
    **DE-C- 921 559**

(73) Patentinhaber: **NORTON GMBH**
    **Vorgebirgsstrasse 10**
    **W-5047 Wesseling(DE)**

(72) Erfinder: **Dussaulx, Michel**
    **Uhlgasse 33**
    **W-5309 Meckenheim/Merl(DE)**
    Erfinder: **Lorenzo, Francisco**
    **An der Wolfsburg 2**
    **W-5303 Bornheim/Roisdorf(DE)**

(74) Vertreter: **Cohausz & Florack Patentanwälte**
    **Postfach 14 01 61 Schumannstrasse 97**
    **W-4000 Düsseldorf 1(DE)**

**Beschreibung**

Die vorliegende Erfindung betrifft ein neues Feuerfestmaterial.

Aus der DE-OS 24 58 268 sind feuerfeste Gemische bekannt, die $Si_3N_4$, SiC, $Al_2O_3$ und Bindemittel enthalten. Der aus diesen Stoffen bestehende Körper wird durch Heißpressen erzeugt, so daß ein Verbundwerkstoff entsteht.

Aus der DE-PS 921 559 und der DE-OS 33 43 577 sind ferner Zusammensetzungen aus Siliziumkarbid, Siliziumnitrid sowie anorganischen Oxiden bekannt.

Aus der EP-Patentanmeldung 153000 ist ein Material bekannt, das aus SiC, $Si_3N_4$ und Aluminiumoxid hergestellt wird. Bei diesem Verfahren werden 4 - 8 Gew.-% Aluminiumpulver und 10 - 16 Gew-% Siliziumpulver eingesetzt. Das Gemisch wird bei ungefähr 1300°C nitridiert. Hierbei entstehen 50 - 80 Gew.-% Sialon. Besonders bevorzugt sind Endprodukte, die 70 % ß-Sialon enthalten.

Aufgabe der vorliegenden Erfindung ist es, ein Feuerfestmaterial mit guten physikalischen und mechanischen Eigenschaften zu schaffen, das kein Verbundwerkstoff ist und kein Sialon enthält.

Diese Aufgabe wird durch ein Material gelöst, das dadurch gekennzeichnet ist, daß der Anteil an SiC 70 Gew.-%, an $Si_3N_4$ 25 Gew.-% und an anorganischen Oxiden 5 Gew.-% beträgt.

Bei den eingesetzten Oxiden handelt es sich vorzugsweise um Eisenoxid, Aluminiumoxid und Natriumoxid. Eisenoxid kann durch Zinkoxid, Aluminiumoxid durch Titanoxid und/oder Zirkoniumoxid und Natriumoxid durch Calcium-, Kalium und/oder Magnesiumoxid ganz oder teilweise ersetzt werden. Als organische Bindemittel kommen übliche Plastifizierungsmittel in Betracht. Hierzu zählen insbesondere Fette, Vaseline, Polyvinylalkohol, Estearin und andere organische Bindemittel.

Das erfindungsgemäße Feuerfestmaterial wird dadurch hergestellt, daß Siliziumcarbidpulver, Siliziumpulver und anorganische Oxidpulver mit einer Korngröße von höchstens 300 um zu einer stabilen Suspension gemischt, einem Formgebungsverfahren unterworfen, getrocknet und bei 1380 - 1450°C in einer Stickstoffatmosphäre gebrannt werden.

Die anorganischen Oxide können bis zu 2 Gew.-% Eisenoxid und bis zu 0,4 Gew.-% Natriumoxid enthalten. Besonders bevorzugt werden 0,5 - 1,5 Gew.-% Eisenoxid und bis zu 0,1 Gew.-% Natriumoxid. Eisenoxid kann durch Zinkoxid, Aluminiumoxid durch Titanoxid und/oder Zirkoniumoxid und Natriumoxid durch Calcium-, Kalium-, Magnesiumoxid ganz oder teilweise ersetzt werden. Die Korngröße der eingesetzten Pulver liegt vorzugsweise im Bereich von 0,1 - 150 um. Als organische Bindemittel werden Plastifizierungsmittel, wie Fette, Vaseline, Polyvinylalkohol und/oder Estearin eingesetzt. Die bevorzugte Brenntemperatur liegt bei 1420°C. Das Brennen erfolgt in einer Stickstoffatmosphäre, damit einerseits die Oxidation verhindert wird und andererseits das Siliziumpulver nitriert wird.

Die nach dem erfindungsgemäßen Verfahren hergestellten feuerfesten Materialien weisen eine ausgezeichnete Biegebruchfestigkeit und Temperaturwechselbeständigkeit auf. Ferner ist der Oxidationswiderstand durch die sehr geringe Gasdurchlässigkeit ausgezeichnet. Die Eigenschaften eines erfindungsgemäßen Produktes sind in der folgenden Tabelle zusammengestellt. Hierbei handelt es sich um ein Feuerfestmaterial, das 70 Gew.-% SiC, 25 Gew.-% $Si_3N_4$ und 5 % anorganische Oxide enthält.

Tabelle 1

| | |
|---|---|
| Raumgewicht | 2,83 g/cm$_3$ |
| Offene Porosität | 11 % |
| Elastizitätsmodul | 250 GPa |
| Biegebruchfestigkeit (bei Raumtemperatur) | 190 MPa |
| Biegebruchfestigkeit (bei 1250°C) | 180 MPa |
| Biegebruchfestigkeit (bei 1400°C) | 180 MPa |
| Gasdurchlässigkeit | 10-4 Nanoperm |
| Porengröße (Mittelwert) | 1 um |
| Oxidationswiderstand | ausgezeichnet |
| Temperaturwechselbeständigkeit | ausgezeichnet |

Die Vorzüge der Eigenschaften des erfindungsgemäßen Feuerfestmaterials werden anhand der folgenden Tabelle deutlich, in der das neue Produkt gemäß der vorliegenden Erfindung mit 4 Produkten gemäß dem Stand der Technik verglichen ist.

Tabelle 2

| Eigensch. | Erfindungs-gemäße Prod. | Cryston[1]) | Cryston[1]) | Cryston[1]) | Refrax[2]) |
|---|---|---|---|---|---|
| SiC (Gew.-%) | 70 | 73 | 74 | 70 | 79—88 |
| $Si_3N_4$ (Gew.-%) | 25 | 24 | 25 | 21 | 18,5—9,5 |
| $SiO_2$ (Gew.-%) | — | — | — | — | 1,4 |
| Andere Oxide (Gew.-%) | 5 | 3 | 1 | 9 | 3,5 |
| Dichte | 2,83 | 2,78 | 2,35 | 2,73 | 2,60 |
| Porosität (%) | 11 | 11 | 23 | 13 | 15 |
| Young Modul (GPa) | 250 | 225 | 130 | 220 | 120 |
| Biefestigkeit (MPa) | | | | | |
| 20°C | 190 | 120 | 80 | 85 | 40—44 |
| 1200°C | 180 | 170 | 114 | 70 | 47 |
| 1400°C | 180 | 125 | 69 | 67 | 42 |
| Wärmeausdehnungskoeffizient, $10^{-6}K^{-1}$, | | | | | |
| 20—1400°C | 4,4 | 5,1 | 4,7 | 5,3 | 4,7 |

[1]) Cryston ist ein Handelsname für siliziumnitridgebundenes Siliziumcarbid von NORTON.
[2]) Carborundum-Produkt

Im Vergleich zu den bekannten Produkten hat nach der vorstehenden Tabelle das erfindungsgemäße Material eine höhere Dichte. Die Porosität ist z. T. gleich oder etwas geringer. Trotzdem hat sich herausgestellt, daß das erfindungsgemäße Produkt eine äußerst zweckmäßige und geeignete Permeabilität aufweist. Dies läßt sich dadurch erklären, daß die Permeabilität nicht alleine von der Porosität abhängt sondern auch von der Porenform. Der Vergleich der Werte in der obigen Tabelle zeigt ferner, daß das Young Modul und die Biegefestigkeitswerte des erfindungsgemäßen Materials erheblich besser sind als beim Stand der Technik. Hierbei ist bemerkenswert, daß die Biegefestigkeit in allen Temperaturbereichen bis 1400 °C nahezu konstant bleibt.

**Patentansprüche**

1. Feuerfestmaterial bestehend aus SiC, $Si_3N_4$ und anorganischen Oxiden,
   **dadurch gekennzeichnet,** daß der Anteil an SiC 70 Gew.-%, an $Si_3N_4$ 25 Gew.-% und an anorganischen Oxiden 5 Gew.-% beträgt.

2. Feuerfestmaterial gemäß Anspruch 1,
   **dadurch gekennzeichnet,** daß die anorganischen Oxide Eisenoxid, Aluminiumoxid und Natriumoxid sind.

3. Feuerfestmaterial gemäß Anspruch 2,
   **dadurch gekennzeichnet,** daß Eisenoxid durch Zinkoxid, Aluminiumoxid durch Titanoxid und/oder Zirkoniumoxid und Natriumoxid durch Calcium-, Kalium- und/oder Magnesiumoxid ganz oder teilweise ersetzt sind.

**Claims**

1. A refractory material consisting of SiC, $Si_3N_4$ and inorganic oxides, characterized in that the proportion of SiC is 70% by weight, of $Si_3N_4$ 25% by weight and of inorganic oxides 5% by weight.

2. A refractory material according to claim 1, characterized in that the inorganic oxides are iron oxide, aluminium oxide and sodium oxide.

3. A refractory material according to claim 2, characterized in that iron oxide is completely or partially replaced by zinc oxide, aluminium oxide by titanium oxide and/or zirconium oxide, and sodium oxide by calcium oxide, potassium oxide and/or magnesium oxide.

**Revendications**

1. Réfractaire constitué de SiC, $Si_3N_4$ et d'oxydes inorganiques,
   caractérisé en ce que la portion de SiC est de 70% en poids, celle de $Si_3N_4$ de 25% en poids et celle des oxydes inorganiques de 5% en poids.

2. Réfractaire selon la revendication 1,
   caractérisé en ce que les oxydes inorganiques sont de l'oxyde de fer, de l'oxyde d'aluminium et de l'oxyde de sodium.

3. Réfractaire selon la revendication 2,
   caractérisé en ce que l'oxyde de fer est remplacé totalement ou partiellement par de l'oxyde de zinc, l'oxyde d'aluminium par de l'oxyde de titane et/ou de l'oxyde de zirconium et l'oxyde de sodium par de l'oxyde de calcium, de potassium et/ou de magnésium.